# EUROPÄISCHE PATENTANMELDUNG

(11) **EP 2 154 493 A2**
(43) Veröffentlichungstag der Anmeldung: **17.02.2010**
(21) Anmeldenummer: 09008739.6
(22) Anmeldetag: 03.07.2009
(51) Int. Cl.: G01F 1/68

(54) **300°C-Flowsensor**

(30) Priorität: 11.08.2008 DE 102008037206
(71) Anmelder: HERAEUS SENSOR TECHNOLOGY GMBH, D-63450 Hanau (DE)
(72) Erfinder: Muziol, Matthias, 63533 Mainhausen (DE); Wienand, Karlheinz, Dr., 63741 Aschaffenburg (DE); Ullrich, Karl-Heinz, Dr., 64823 Groß-Umstadt (DE)
(74) Vertreter: Kühn, Hans-Christian

(57) **Zusammenfassung**

Messeinrichtung, insbesondere anemometrische Messeinrichtung und deren Befestigung in einem Abgasrohr, insbesondere Abgasrückführrohr, bei der in einem Spritzgussgehäuse aus Kunststoff ein keramischer Träger so eingebettet ist, dass auf dem keramischen Träger an dem der Einbettung entgegen gesetzten Ende wenigstens ein Schichtwiderstand befestigt ist und von diesem aus elektrische Verbindungen zum eingebetteten Ende des keramischen Trägers führen und wobei die elektrische Verbindung durch den Spritzguss hindurchgeführt wird, inner halb des Spritzgussteils abgedichtet und befestigt ist und wobei zur Abdichtung und Befestigung weitere Bauteile anwendbar sind.

## Beschreibung

Die vorliegende Erfindung betrifft die Messung in Abgasströmen, insbesondere anemometrische Messungen, zur Abgasrückführung von Verbrennungskraftmaschinen.

EP 95 911 257 offenbart Heißfilmanemometer.
EP 0 990 674 A offenbart eine Abgasrückführung.
EP 03 023 484, EP 06 806 497 und WO 2008/000494 offenbaren anemometrische Messeinrichtungen und die noch nicht veröffentlichte PCT/EP2008/003236 beschreibt eine Befestigung einer anemometrischen Messeinrichtung in einem Abgasrückführrohr.

Einfache, insbesondere mit Spritzgussgehäusen hergestellte Messeinrichtungen mit geringeren Temperaturanforderungen sind nur für Temperaturen bis ungefähr 140°C geeignet. Dabei ist ein Freibrennen der Sensorelemente von Ablagerungen und Ruß nicht möglich, da die Dünnschicht-Messelemente gegebenenfalls aktiv auf 650°C aufgeheizt werden müssen, um sie von Ablagerungen, insbesondere Ruß, frei zu brennen. Im Messbetrieb werden die Sensoren mit Temperaturen oberhalb der Temperatur des Abgases betrieben. Dabei darf ein Kunststoffgehäuse des Flowsensors nicht überhitzt werden.

Die Aufgabe der vorliegenden Erfindung besteht darin, einen Flowsensor mit einem Kunststoffgehäuse, insbesondere Spritzgussgehäuse, bereitzustellen, der zur Anwendung in einem Abgaskanal geeignet ist und dessen messaktiver Bereich frei gebrannt werden kann.

Die Aufgabe wird durch die Merkmale der unabhängigen Ansprüche gelöst. Vorteilhafte Ausgestaltungen ergeben sich aus den abhängigen Ansprüchen.
Zur Lösung der Aufgabe werden die Schichtwiderstände auf einem keramischen Zwischenträger insbesondere einer Platte gehalten, über den die Temperatur bis zum Gehäuse abfallen kann.

Das Kunststoffgehäuse wird weiterhin bezüglich der Abgastemperatur vor Überhitzung geschützt, indem es mitsamt dem Träger mit einer Metallkappe im Bereich des Abgases abgeschirmt ist, wobei die metallische Abschirmung bei der Befestigung der Messeinrichtung mit einem Luftspalt vom Abgasrohr beabstandet bleibt. Das Kunststoffgehäuse, insbesondere aus Spritzguss, wird bezüglich des Abgasrohres in oder am Ende eines Stutzens oder Schafts am Abgasrohr so weit zurückgezogen, dass es sich außerhalb des Abgasrohres befindet. Mit diesen Maßnahmen wird es ermöglicht, bis zu 300°C heiße Abgasströme mit einer ein Spritzgussgehäuse aufweisenden Messeinrichtung zu messen und Ablagerungen auf dem messaktiven Bereich freizubrennen.

Erfindungsgemäß können die Dünnschicht-Messelemente gegebenenfalls aktiv auf 650° C zum Freibrennen von Ablagerungen hochgeheizt werden, ohne das Kunststoffgehäuse zu zerstören. Vorzugsweise werden Dünnfilm-Messelemente der Schichwiderstände auf einem Keramikträger mit Aussparungen positioniert. Vorzugsweise werden Drähte der Schichtwiderstände in Nuten der Keramikträger eingelegt und insbesondere dort mit Glas eingebettet.

Eine besonders einfache Kontaktierung zu Anschlussleitungen, insbesondere mittels Krimphülsen mit Schweißfläche, wird ermöglicht, wenn die Drähte des Schichtwiderstands an dem dem messaktiven Teil des Schichtwiderstands entgegen gesetzten Ende des Keramikträgers herausragen. Der Keramikträger weist vorzugsweise eine besonders geringe Wärmeleitfähigkeit auf, indem er beispielsweise aus Steatit besteht und somit nur wenig Wärme an das Kunststoffgehäuse weiterleitet. Wenn erfindungsgemäß durch die Metallkappe als Abschirmung intensiver Kontakt mit heißem Abgas vermieden wird, ist ein bis 230° C beständiger, spritzgießfähiger Kunststoff wie z. B. PPS als Gehäusewerkstoff einsetzbar. Damit werden erfindungsgemäß alle Vorteile der Spritzgusstechnik erschlossen. Vorzugsweise liegt deshalb das Kunststoffgehäuse außerhalb des Strömungsquerschnitts des Abgasrohres.

Erfindungsgemäß kann der Keramikträger am Kunststoffgehäuse auch mit einem wärmebeständigen Elastomer, wie Silikonkautschuk oder Viton befestigt und abgedichtet werden. Vorzugsweise ist die Dichtung nicht kompressibel, wie beispielsweise Silikonkautschuk, mit dem Drücke bis 6 bar abgedichtet werden.

Die Schichtwiderstände weisen auf einem Substrat, insbesondere Keramikplättchen befestigte Leiterbahnen auf die den messaktiven Widerstand bilden. Diese Leiterbahnen sind vorzugsweise strukturierte Dünnschichten, insbesondere aus Platin. Besonders bewährt haben sich für die vorliegende Erfindung Schichtwiderstände mit Anschlussdrähten, die mit einer Zugentlastung aus Glas die auf Kontaktfeldern befestigten Anschlussdrähte fixieren.

Eine erfindungsgemäße Messeinrichtung, insbesondere anemometrische Messeinrichtung, zur Verwendung in einem Abgasrohr, insbesondere Abgasrückführrohr, bettet in einem Spritzgussgehäuse aus Kunststoff einen keramischer Träger, insbesondere eine Platte so ein, dass auf dem keramischen Träger an dem der Einbettung entgegen gesetzten Ende wenigstens ein Schichtwiderstand befestigt ist und von diesem aus Drähte zum eingebetteten Ende des keramischen Trägers führen. Die Drähte sind an elektrische Verbindungen angeschlossen, die durch den Spritzguss hindurchgeführt, innerhalb des Spritzgussteils abgedichtet und befestigt sind.

Vorzugsweise
- werden zur Abdichtung und Befestigung weitere Bauteile oder Materialien verwendet;
- ist der Schichtwiderstand mit Glasmasse auf dem keramischen Träger befestigt und abgedichtet;
- sind der Träger und das Spritzgussgehäuse mit einer Dichtung gegeneinander abgedichtet.
- sind die Drähte der Schichtwiderstände im eingebetteten Bereich des Trägers mittels Dichtmasse abgedeckt;
- weist das Spritzgussgehäuse einen Flansch auf;
- ist der Kontaktbereich der Drähte des Schichtwiderstands mit den elektrischen Verbindungen an dem dem Messwiderstand entgegen gesetzten Ende des Trägers mit einer Dichtungsmasse gegen den Träger und das Gehäuse abgedichtet;
- liegen die Drähte in Aussparungen des Trägers;
- weist der Schichtwiderstand einen an Drähte angeschlossen Messwiderstand auf, die im Bereich des Trägers mit einer Glasumhüllung umgeben sind.

Zur Herstellung der Messeinrichtung werden die Drähte auf dem Träger, insbesondere der Platte mit einer Glasmasse eingebettet, die Glasmasse hierauf gebrannt und nach dem Brennen die Drähte durch Abkühlen von der Glasumhüllung gelöst, dass sie in der Glasumhüllung axial beweglich werden.

Die Messeinrichtung wird mit ihrem metallischen Gehäuse in ein Abgasrohr eingeschoben, ohne dass das metallische Gehäuse das Abgasrohr berührt. Das metallische Gehäuse wird auf das Kunststoffgehäuse gesteckt, welches direkt oder mit einer Dichtung an einem Flansch am Abgasrohr abgedichtet und befestigt wird.

Die Befestigungsvorrichtung einer Messeinrichtung, insbesondere anemometrischen Messeinrichtung, in einem Abgasrohr, insbesondere Abgasrückführrohr, ist erfindungsgemäß so ausgeführt, dass die metallische Abschirmung vom Abgasrohr, insbesondere dessen Stutzen, für die Messeinrichtung mit einem Spalt beabstandet ist, so dass kein metallischer Kontakt zwischen dem Gehäuse und dem Abgasrohr in der oberen Hälfte des am Abgasrohr angesetzten abgasrohrseitigen Stutzens vorhanden ist und das Kunststoffgehäuse direkt oder mit einer Dichtung an einem Flansch oder am Ende des Stutzens des Abgasrohres anliegt.

Die Messeinrichtung weist einen Schichtwiderstand auf, der auf einem keramischen Träger befestigt ist und wobei der keramische Träger auf der dem funktionellen Messwiderstand des Schichtwiderstands entgegen gesetzten Seite von einem Kunststoffgehäuse (8) gehalten ist, welches mit einem Dichtungsmaterial gegen den Träger abgedichtet ist und an dem eine metallische Abschirmung befestigt ist, die den Träger und den Schichtwiderstand bis auf dessen Bereich des funktionellen Messwiderstands abschirmt.

Im Folgenden wird die vorliegende Erfindung anhand von Beispielen mit Bezug auf die Zeichnungen verdeutlicht.
- Fig. 1: zeigt einen Schnitt eines in einem Abgasrohr befestigten Anemometers;
- Fig. 2: zeigt das Anemometer in Seitenansicht und Draufsicht;
- Fig. 3: zeigt die Anordnung zweier Schichtwiderstände auf einem keramischen Träger in Draufsicht und Seitenansicht;
- Fig. 4: zeigt Kontaktierungen der Drahtenden der Schichtwiderstände mit als Steckkontakt aus gebildeten Verbindungen;
- Fig. 5: zeigt Kontaktierungen der Drahtenden der Schichtwiderstände über elektrische Verbindungen zu den Anschlussleitungen.

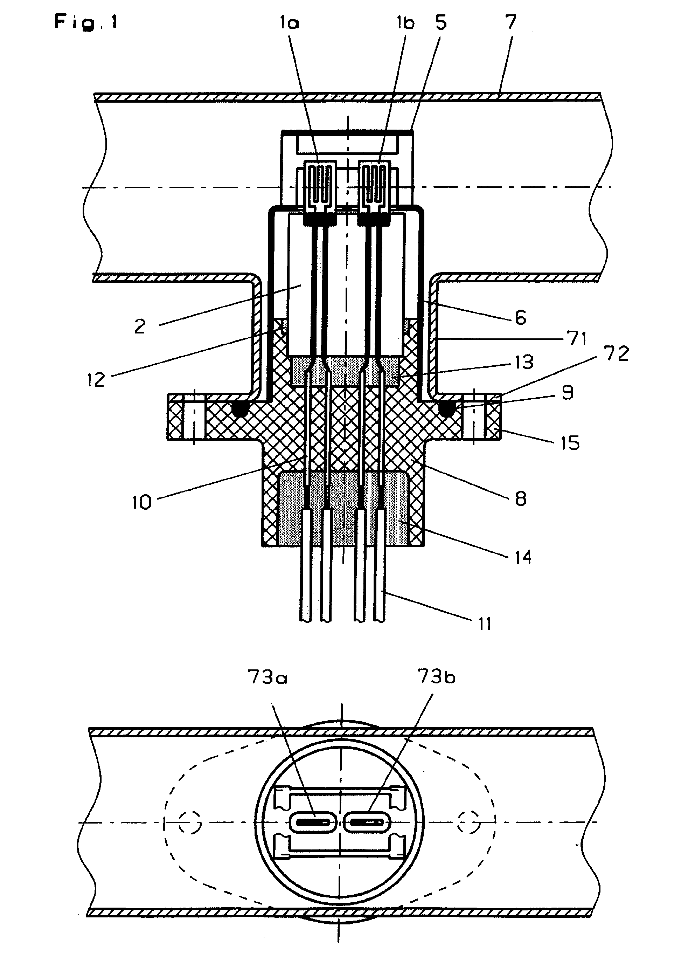

In der Anordnung nach Fig. 1 sind Dünnschicht-Messelemente 1a und 1b im Abgasrohr 7 angeordnet. Die Dünnschicht-Messelemente 1a und 1 b sind jeweils Teile von Schichtwiderständen, die in Aussparungen eines Keramikträgers 2 befestigt sind und deren Drähte 3 in Nuten des als Platte ausgebildeten Keramikträgers 2 eingelegt sind. Die Drähte 3 sind im Bereich der Nuten mit einer Glasmasse 4 so umschmolzen, dass sie nach dem Abkühlen der Glasschmelze sich soweit zusammenziehen, dass sie innerhalb der verbleibenden Glasumhüllung 4 axial beweglich sind. Die Drähte 3 der Schichtwiderstände sind elektrisch mit den Dünnschicht-Messelementen 1 a und 1 b verbunden und mit einem Fixiertropfen 74 zugentlastet. Am kalten Ende des Trägers 2 werden die Drähte 3 mit einer Silikonabdichtung 13 gegen das Gehäuse 8 abgedichtet. Der keramische Träger 2 ist mit einer Silikondichtung 12 gegen das Kunststoffgehäuse 8 abgedichtet, um den Eintritt von Medien, z. B. Abgas oder Ruß aus dem Abgasrohr in das Kunststoffgehäuse 8 zu verhindern und damit die Bildung von Parallelwiderständen. Das Kunststoffgehäuse 8 ist ein Spritzgussteil aus PPS. Eine metallische Abschirmung 6 schützt das Spritzgussteil 8 vor Überhitzung durch das Abgas. Dabei verbleibt zwischen der Abschirmung 6 und dem Befestigungsflansch des Abgasrohres 7 ein Luftspalt, um eine Berührung des Abgasrohrs 7 mit der Abschirmung 6 zu verhindern. Das Spritzgussteil 8 wird auf dem Flansch 72 des Abgasrohres 7 befestigt und mit einem O-Ring 9 abgedichtet. Die innerhalb des Spritzgussteils 8 angeordneten elektrischen Verbindungen10 verbinden die Drähte 3 mit den Anschlussleitungen 11. Die Anschlussleitungen 11 werden im Bereich des Kunststoffgehäuses 8 mit einer Abdichtung 14 abgedichtet, um den Eintritt von Medien, z. B. Salzwasser, außerhalb des Abgasrohres zu verhindern und die Bildung von Parallelwiderständen durch elektrisch leitfähige Medien auszuschließen. Die Abdichtung 14 ist durch Ausgießen mit Dichtmasse oder durch Umspritzen in einer Spritzgußmaschine herstellbar.

In Fig. 1 ragen von den Schichtwiderständen 1a und 1b, deren Meßelemente durch die Schlitze 73a, 73b der Abschirmung 6. Abschirmung und Schichtwiderstände berühren sich nicht. Damit werden die Schichtwiderstände weder mechanisch belastet noch thermisch angekoppelt. Der Spalt zwischen dem Meßelement und der Abschirmung 6 wird möglichst gering gehalten, damit in dieser Öffnung das im Abgasrohr vorbeiströmende Abgas möglichst wenig Turbulenzen erzeugt und deshalb die Luftisolierung zwischen dem Träger 2 und der Abschirmung 6 möglichst geringfügig beeinträchtigt.

Die Dichtungen 13 und 14 unterbinden Gasströmungen, so dass die Luft zwischen dem Träger 2 und der Abschirmung 6 als wärmeisolierendes Luftkissen wirkt.

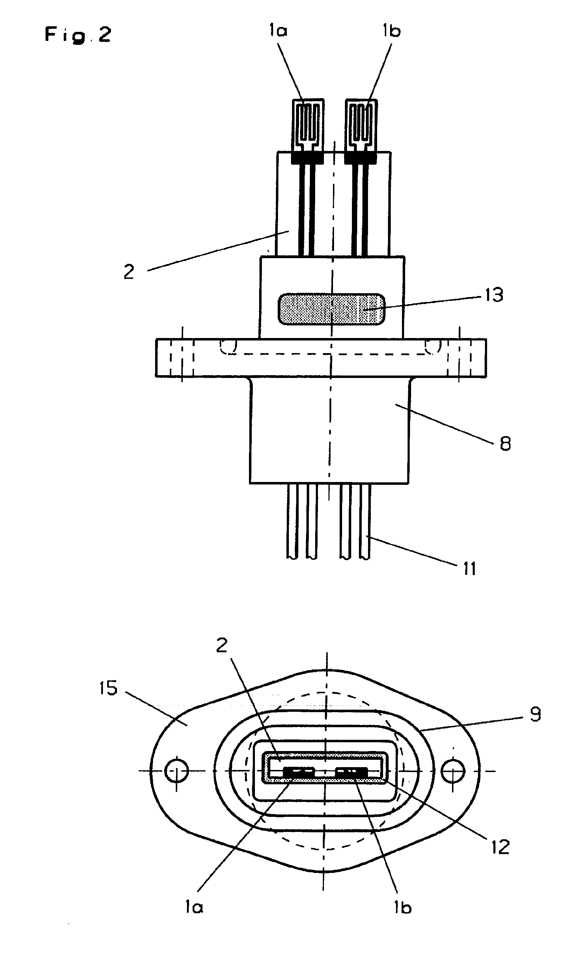

Die Seitenansicht von Fig. 2 verdeutlicht ohne die Abschirmung 6 aus Fig. 1, wie die auf dem Träger 2 befestigten Schichtwiderstände mit ihren Drähten 3 und dem Träger 2 in dem Spritzgussgehäuse 8 angeordnet und mit der Dichtung 13 abgedichtet sind. In der Draufsicht von Fig. 2 erkennt man die Einbettung des Trägers 2 in dem Spritzgußgehäuse 8 und die Dichtung 12 mit der der Träger 2 gegen das Gehäuse 8 abgedichtet ist. Die Dichtung 12 kann durch Ausgießen mit Dichtmasse hergestellt werden. Auf diese Weise wird der Träger besonders stabil im Gehäuse befestigt. Weiterhin verhindert die Dichtung den Eintritt von Medien zwischen den Träger und das Gehäuse.

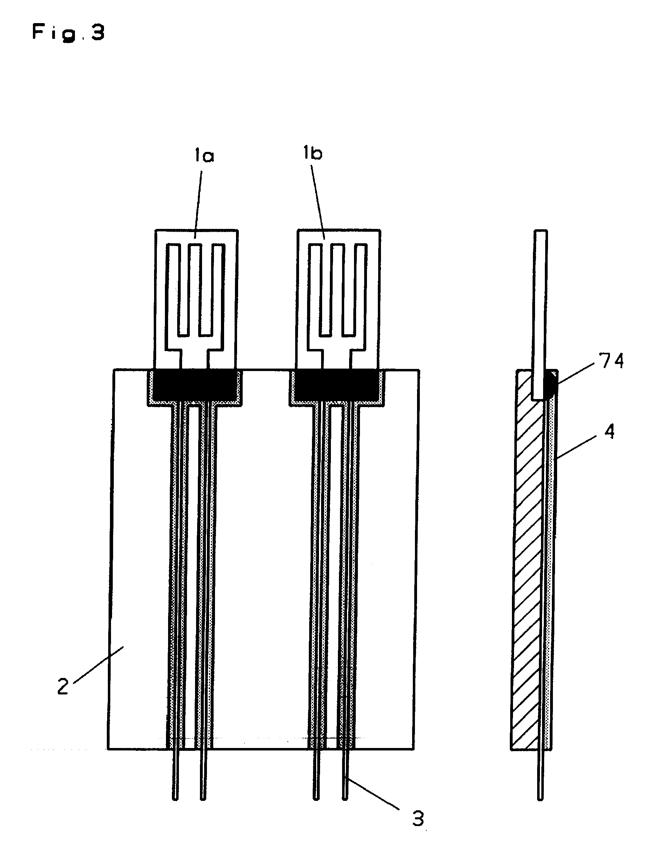

Die Schichtwiderstände 1 a und 1 b gemäß Fig. 3 bestehen aus einem Substrat und einer darauf angeordneten Dünnschicht-Leiterbahn, die mit Drähten 3 elektrisch verbunden sind. Die Drähte 3 sind mit einem Fixiertropfen 74 zugentlastet. Dabei werden die Schichtwiderstände 1 a und 1 b mit ihren Zugentlastungen in Aussparungen des Trägers 2 angeordnet und die Drähte 3 der Schichtwiderstände in Nuten des Trägers 2 gelegt. Um die Drähte 3 wird eine Glashülle 4 erzeugt, in der die Drähte axial beweglich sind. Hierzu werden sowohl die Aussparung als auch die Nuten mit Glaspaste gefüllt. Beim Schmelzen der Glaspaste wird der Bereich der Zugentlastung der Dünnschicht-Messelemente 1 a und 1 b fest mit dem keramischen Träger 2 verbunden, und das Glas in den Nuten des Trägers 2 ummantelt die Drähte 3, die somit in der Ummantelung gehalten sind und gegen das Medium im Abgasrohr abgedichtet sind. Beim Abkühlen des Glases ziehen sich die Drähte 3 zusammen, so dass die Drähte 3 in der Glasummantelung 4 axial beweglich sind. Hierdurch werden Spannungen aufgrund der unterschiedlichen Ausdehnungskoeffizienten von Glasummantelung 4 und Drähten 3 vermieden.

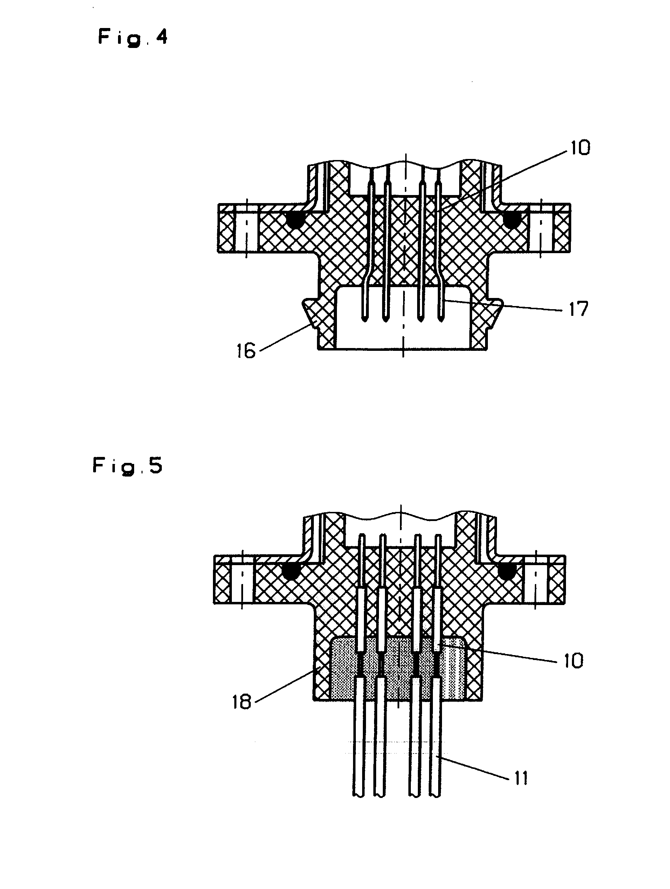

Gemäß Fig. 4 ist der Anschlussbereich mit Steckkontakten 17 und einer Kunststoffumrandung mit Rasthaken 16 als Anschlußstecker ausgebildet. Ein Umspritzen massiver Kontaktstifte mit Kunststoff bewirkt eine Zugentlastung der Anschlüsse und Abdichtung dergleichen. Bei der hierdurch ermöglichten Steckverbindung werden die ineinander zu steckenden Teile vorzugsweise mit einer Dichtung gegeneinander abgedichtet. Nach Fig. 4 können die elektrischen Verbindungen 10 auch als Leadframe ausgeführt werden, um den Abstand der Anschlußdrähte 3 auf den Abstand der Anschlußleitungen 11 zu weiten, ohne dass dabei die Anschlußdrähte 3 auseinandergebogen werden müssen.

Gemäß Figur 5 ist der Kabelausgangsbereich 18 über Anschlußleitungen 11 elektrisch fortgeführt. Hierdurch wird eine zusätzliche Steckverbindung eingespart.

## Patentansprüche

1. Messeinrichtung, insbesondere anemometrische Messeinrichtung, zur Verwendung in einem Abgasrohr, insbesondere Abgasrückführrohr, bei der in einem Spritzgussgehäuse aus Kunststoff ein keramischer Träger so eingebettet ist, dass auf dem keramischen Träger an dem der Einbettung entgegen gesetzten Ende wenigstens ein Schichtwiderstand befestigt ist und von diesem aus elektrische Verbindungen zum eingebetteten Ende des keramischen Trägers führen und wobei die elektrische Verbindung durch den Spritzguss hindurchgeführt wird, innerhalb des Spritzgussteils abgedichtet und befestigt ist und wobei zur Abdichtung und Befestigung weitere Bauteile anwendbar sind.

2. Messeinrichtung nach Anspruch 1, **dadurch gekennzeichnet, dass** der Schichtwiderstand mit Glasmasse auf dem keramischen Träger befestigt und abgedichtet ist.

3. Messeinrichtung nach Anspruch 1, **dadurch gekennzeichnet, dass** der Träger und das Sprifzgussgehäuse mit einer Dichtung gegeneinander abgedichtet sind.

4. Messeinrichtung nach Anspruch 1, **dadurch gekennzeichnet, dass** die elektrischen Verbindungen im eingebetteten Bereich des Trägers mittels Dichtungsmasse abgedeckt sind.

5. Messeinrichtung nach Anspruch 1, **dadurch gekennzeichnet, dass** das Spritzgussgehäuse einen Flansch aufweist.

6. Messeinrichtung nach Anspruch 1 bis 4, **dadurch gekennzeichnet, dass** die elektrischen Verbindungen an dem dem Messwiderstand entgegen gesetzten Ende des Trägers mit einer Dichtungsmasse gegen den Träger und das Gehäuse abgedichtet sind.

7. Messeinrichtung nach einem der Ansprüche 1 bis 6, **dadurch gekennzeichnet, dass** die Drähte (3) in Aussparungen des Trägers liegen.

8. Messeinrichtung nach einem der Ansprüche 1 bis 7, **dadurch gekennzeichnet, dass** der Schichtwiderstand einen Messwiderstand aufweist, der an Drähte (3) angeschlossen ist, die im Bereich des Trägers mit einer Glasumhüllung umgeben sind.

9. Messeinrichtung nach einem der Ansprüche 1 bis 8, **dadurch gekennzeichnet, dass** der Träger eine Platte ist.

10. Verfahren zur Herstellung einer Messeinrichtung nach einem der Ansprüche 1 bis 9, **dadurch gekennzeichnet, dass** die Drähte (3) auf dem Träger (2) mit einer Glasmasse eingebettet werden, die Glasmasse hierauf gebrannt wird und nach dem Brennen die Drähte durch Abkühlen sich soweit von der Glasumhüllung lösen, dass sie in der Glasumhüllung axial beweglich bleiben.

11. Verwendung einer Messeinrichtung nach einem der Ansprüche 1 bis 10, **dadurch gekennzeichnet, dass** eine Messeinrichtung mit einem metallischen Gehäuse in ein Abgasrohr eingeschoben wird, ohne dass das metallische Gehäuse das Abgasrohr berührt und das metallische Gehäuse auf einem Kunststoffgehäuse aufgesteckt wird, welches direkt oder mit einer Dichtung an einem Flansch am Abgasrohr abgedichtet und befestigt wird.

12. Befestigung einer Messeinrichtung, insbesondere anemometrischen Messeinrichtung, in einem Abgasrohr, insbesondere Abgasrückführrohr, wobei die Messeinrichtung einen Schichtwiderstand aufweist, der auf einem keramischen Träger befestigt ist und wobei der keramische Träger auf der dem funktionellen Messwiderstand des Schichtwiderstands entgegen gesetzten Seite von einem Kunststoffgehäuse (8) gehalten ist, welches mit einem Dichtungsmaterial gegen den Träger abgedichtet ist und an dem eine metallische Abschirmung befestigt ist, die den Träger und den Schichtwiderstand bis auf dessen Bereich des funktionellen Messwiderstands abschirmt, **dadurch gekennzeichnet, dass** die metallische Abschirmung (6) vom Abgasrohr, insbesondere dessen Stutzen, für die Messeinrichtung mit einem Spalt beabstandet ist, so dass kein metallischer Kontakt zwischen dem Gehäuse (6) und dem Abgasrohr (7) in der oberen Hälfte des am Abgasrohr angesetzten abgasrohrseitigen Stutzens (71) vorhanden ist und das Kunststoffgehäuse direkt oder mit einer Dichtung (9) an einem Flansch (72) oder am Ende des Stutzens (71) des Abgasrohres anliegt.
